# EUROPEAN PATENT SPECIFICATION

(11) **EP 3 492 877 B1**
(45) Date of publication and mention of the grant of the patent: **20.04.2022**
(21) Application number: 17205135.1
(22) Date of filing: 04.12.2017
(51) Int. Cl.: G01F 1/66, G01F 15/14, G01F 15/18

(54) **TRANSDUCER ASSEMBLY FOR ULTRASONIC FLOW METER**
WANDLERANORDNUNG FÜR ULTRASCHALLDURCHFLUSSMESSER
ENSEMBLE DE TRANSDUCTEUR POUR COMPTEUR DE FLUIDE ULTRASONIQUE

(43) Date of publication of application: 05.06.2019
(73) Proprietor: Kamstrup A/S, 8660 Skanderborg (DK)
(72) Inventor: BORRING, Peter Nordlund, 7100 Vejle (DK)
(74) Representative: Plougmann Vingtoft a/s

(56) References cited:
- JP-B2- 3 079 336
- US-A- 3 771 117
- US-A- 5 179 862
- US-A- 5 339 292

## Description

### FIELD OF THE INVENTION

The invention relates to the field of ultrasonic flow meters, in particular ultrasonic flow meters with ultrasound transducer assemblies mounted on the flow pipe and penetrating into the flow pipe and having direct contact to the fluid in the flow pipe.

### BACKGROUND OF THE INVENTION

Ultrasonic flow meters use ultrasonic waves for measuring flow. Ultrasound transducers are utilized to transmit ultrasonic waves into the flow pipe of the meter and receive the ultrasonic waves that has travelled through the fluid flowing in the flow pipe. By measuring the phase shift between the transmitted and received signal the flow inside the flow pipe can be measured. The ultrasound transducers are usually arranged in a transducer assembly which may include; a membrane to shield the transducer from the fluid, a matching layer for matching the impedance of the transducers to ensure optimal transmission of ultrasonic waves, electrical connections to the transducer and mechanisms for ensuring a sufficient ultrasonic coupling between the transducers and the membrane e.g. in the form of springs.

The transducer assembly might be mounted at the outer surface of the flow pipe without a through-going hole; this requires the ultrasonic waves to propagate through the wall of the flow pipe. Especially for larger dimension meters and meters with a flow pipe made from metal, the transducer assembly often has a direct contact to the fluid in the flow pipe. In this case, the transducer assembly is mounted on the flow pipe in relation to a through-going hole in the wall of the flow pipe.

Known flow meters have a mounting-seat for the transducer assembly. The mounting-seat is a plane surface on the inside or outside of the flow pipe. The mounting-seat may be angled in an oblique angle in relation to the flow direction. This is done in order to ensure an angling of the transducers and eliminating the need for reflectors within the flow pipe. In other solutions, the mounting-seat is parallel to the flow direction, this requires the use of reflectors in the flow pipe or that the ultrasound transducers inside the transducer arrangement is mounted in an oblique angle to the flow direction.

The mounting-seats for the transducer assemblies are plane surfaces on the flow pipe. The plane mounting-seat may be made in the casting process of the flow pipe. A mounting seat made in the casting process will often require additional machining. In this case the flow pipe will be an element produced specifically for the meter requiring different moulds for each dimension of flow meters.

Often the flow pipe is made from a prefabricated pipe having dimensions adequate for the flow meter being produced. This is especially the case for large dimension meters. The prefabricated pipe is a standard element that only needs to be cut out in the right length, which eliminates the need for costly special tools for producing the flow pipe. However, the standard pipe will need holes and plane mounting-seats for the transducer assemblies. To create a plane mounting-seat a section is cut out of the flow pipe wall and a new section including a plane surface for reception of the transducer assemblies is welded in the place of the cut out section. The section welded into the flow pipe may also ensure the angling of the transducers. The section with holes for mounting the transducer assemblies is a casted part that might need machining after the casting procedure. This would add complexity to the construction, increase the number of steps in the production process and finally add cost to the product.

Cutting out a section of the wall of the prefabricated pipe and welding in a new section is an expensive procedure. The welding procedure might cause stresses in the pipe wall, which can lead to a deformation of the pipe and as a result might cause a misalignment of the inlet and outlet opening of the flow pipe. This may result in the flanges being non-concentric which would complicate installation of the flow meter.

Document US3771117A relates to an ultrasound transducer assembly configured to be mounted on the curved surface of a flow pipe, wherein the housing is engaging the fluid side of the wall by virtue of a shoulder portion.

Document JP3079336B2 describes an ultrasound transducer assembly configured to be mounted on the curved surface of a flow pipe, wherein a flange portion is formed on one end side of the holder so as to contact the inner peripheral surface of the lining layer.

### OBJECT OF THE INVENTION

The object of the invention is to create a cost reduced and less complex alternative to the current solutions for mounting transducer assemblies with direct contact to the fluid in the flow pipe of an ultrasonic flow meter.

### SUMMARY OF THE INVENTION

A first aspect of the invention provides; an ultrasound transducer assembly, for being mounted in a through-going hole provided in a wall of a flow pipe of an ultrasonic flowmeter, the transducer assembly comprising; -a transducer-housing adapted to protrude into a cavity of the flow pipe, -an ultrasound transducer arranged inside the transducer-housing, -a membrane arranged to close off one end of the transducer-housing and shield the transducer from the cavity of the flow pipe, electrical connections to the ultrasound transducer and sealing means, wherein the transducer assembly is arranged to be mounted on the curved surface of the flow pipe, -the transducer-housing has a corresponding surface meeting the curved inner surface of the flow pipe, and -the corresponding surface has a curvature radius adapted to the inner curvature radius of the flow pipe, characterized in that the sealing means are arranged between the inner surface of the flow pipe and the corresponding surface of the transducer-housing to prevent leakage of fluid from the flow pipe.

Providing an ultrasound transducer assembly is advantageous in that it constitutes a single unit that can easily be mounted in a flow pipe during the production process of an ultrasonic flow meter. The flow pipe is a pipe with an inlet and an outlet, the wall of the flow pipe creates a duct through which a fluid is let and the flow rate is measured. The through-going hole in the wall of the flow pipe creates a passage from the inner surface to the outer surface of the flow pipe in which the transducer assembly is mounted. The transducer assembly being mounted in the through-going hole does to necessarily mean that the transducer assembly is penetrating through the through-going hole in the wall from one side of the wall to another. The transducer assembly might simply be meeting the inner surface of the flow pipe without any part of the transducer assembly passing through the through-going hole. The transducer assembly is mounted on the inner surface of the flow pipe protruding into the cavity of the flow pipe, in this way the transducer assembly is in direct contact with the fluid flowing in the flow pipe. The membrane closes the transducer assembly towards the cavity of the flow pipe, this ensures that the transducer is shielded from the fluid flowing in the cavity of the flow pipe. The membrane may further have the function of matching the acoustic impedance of the transducer and the fluid in the flow duct. Mounting the transducer assembly directly on the curved inner surface of the flow pipe has the advantage that the transducer assembly can be mounted in the wall of a standard prefabricated pipe only by cutting a suitable hole in the wall of the pipe. The corresponding surface of the transducer-housing is arranged to match the curved inner surface of the wall of the flow pipe. Matching of the inner surface enables the use of standard sealing means to prevent fluid from passing between the corresponding surface of the transducer-housing and the inner wall of the flow pipe. Thus sealing means between the corresponding surface and the inner wall of the flow pipe may prevent the two surfaces from having a direct contact. By adapting the curvature radius of the corresponding surface to the curvature radius of the inner surface of the flow pipe, tolerances on the curvature of the flow pipe as well as the used sealing means may be compensated for.

To reduce production costs and complexity the transducer-housing is injection molded in a single monolithic piece. The transducer-housing angles the transducer in an angle oblique to the flow direction. Angling the transducers has the advantage that the need for reflectors within the cavity of the flow pipe is eliminated.

To ensure that transducer assembly does not disengage from the flow pipe the transducer assembly is configured to be locked in place by a locking mechanism outside the flow pipe. Locking mechanism may include one or more standard elements such as bolts, screws, locking rings, disc washers and washers. The locking mechanism might include custom made elements such as washers with additional holes a custom made locking ring or a locking element for snap locking the transducer assembly.

The transducer assembly comprises several parts, among those a transducer unit, a membrane and a locking ring for locking the membrane in position within the transducer-housing. In one embodiment the transducer-housing is arranged to receive the transducer unit through a membrane opening adapted to be closed off by the membrane. The membrane is locked in position by a locking ring.

In another embodiment the membrane is an integrated part of the transducer-housing, both formed together in a single monolithic piece. In this embodiment the transducer-housing is arranged to receive the transducer arrangement through a transducer opening provided in an end of the transducer-housing opposite the membrane. This embodiment has the advantage of providing a single closed surface of the transducer assembly towards the cavity of the flow pipe.

In some embodiments the ultrasound transducer assembly is arranged to be aligned by fitting into a non-circular through-going hole in the wall of the flow pipe. Accurate alignment of the transducer assemblies is important to ensure optimal transfer of ultrasonic sound waves between the transducers. To make sure that the transducer assemblies cannot be mounted pointing in a wrong direction an alternative wherein the transducer assembly is arranged to be aligned by fitting into an asymmetric and non-circular through-going hole in the wall of the flow pipe is provided as well. Using the shape of the through-going hole in the wall of the flow pipe it is advantageous if one or more parts of the transducer-housing extends into the through-going hole in the wall of the flow pipe. The part of the transducer-housing extending into the hole in the wall of the flow pipe is adapted to match the shape of the through-going hole and in this way align the transducer-housing.

The transducer assembly my along with the flow pipe and an external fixating element be seen as a system comprising a flow pipe of an ultrasonic flow meter and an ultrasound transducer assembly according to the description above wherein; -the ultrasound transducer assembly is mounted in a through-going hole in the wall of the flow pipe, -the through-going hole is circular, -the transducer assembly is aligned by an external fixating element. This system of elements has the advantage of aligning the transducers by an additional external element. To support alignment it may be beneficial if the external fixating element has a curved surface with a curvature radius adapted to the curvature radius of the outer surface of the flow pipe. The external fixating element is locked to one transducer assembly or as an alternative the external fixating element is locked to two or more transducer assemblies. Connecting two or more transducers assemblies has the advantage of aligning the transducer assemblies directly to each other. Alternatively to locking the transducer assemblies directly together the external fixating element is locked to a fixating point on the wall of the flow pipe.

### BRIEF DESCRIPTION OF THE FIGURES

Fig. 1 is a cross section showing the detailed construction of a transducer assembly including the transducer unit, the transducer-housing and the locking mechanism;
Fig. 2 depicts the curvature of the inner surface of the flow pipe and the matching curvature of the corresponding surface of the transducer-housing;
Fig. 3 show the non-circular asymmetric hole in the flow pipe for mounting the transducer assembly;
Fig. 4 is a cross section of an angled closed transducer-housing for a transducer assembly;
Fig. 5 is a cross section of another alternative embodiment wherein a non-angled closed transducer-housing is used for the transducer assembly;
Fig. 6A-6C illustrates an external fixating element, where 6A is a cross section of two closed transducer-housings mounted in the wall of a flow pipe and aligned by the external fixating element, 6B show the external fixating element from the outside of the flow pipe and 6C is a cross section showing the curved surface of the external fixating element.

### DETAILED DESCRIPTION OF AN EMBODIMENT

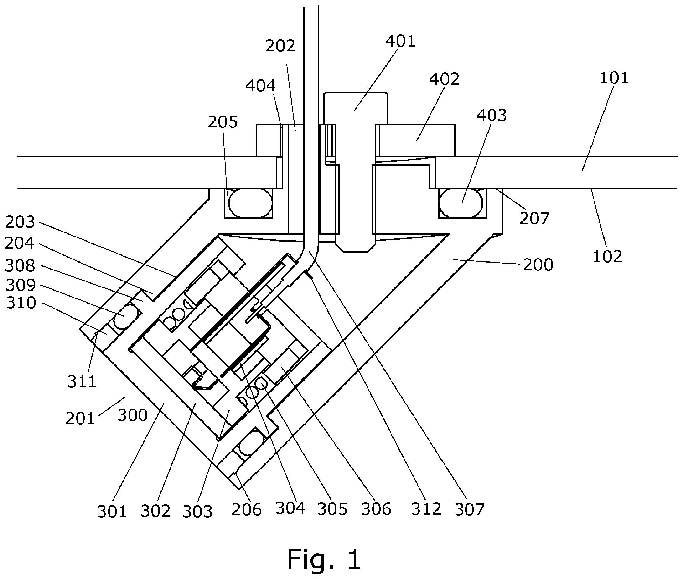

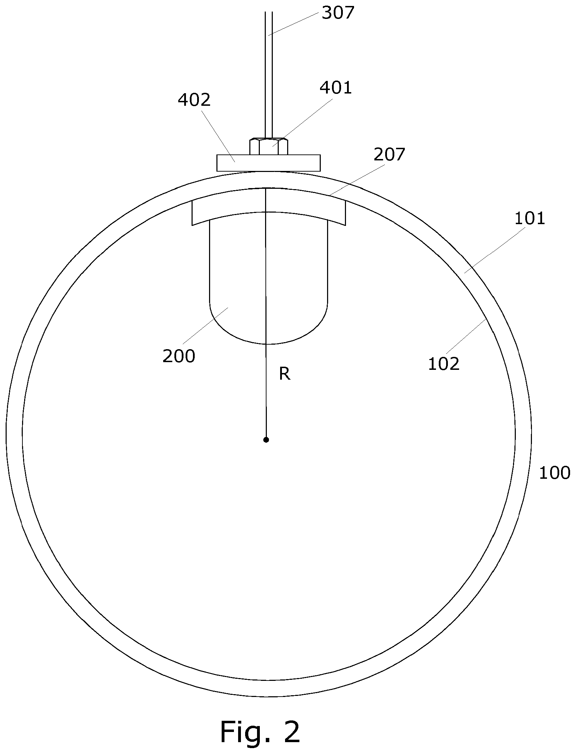

Fig. 1 shows a transducer assembly arranged to be mounted in a flow pipe 100 of an ultrasonic flow meter. The transducer assembly is arranged to be mounted directly on the curved inner surface of the flow pipe 102, eliminating the costly and complex steps of establishing a plane mounting-seat on the flow pipe 100, see fig. 2. The transducer assembly is mounted in a through-going hole 103 in the wall of the flow pipe 101. The transducer assembly comprises a transducer-housing 200, an ultrasound transducer 302 and a membrane 301. The transducer-housing 200 has a corresponding surface 207 meeting the curved inner surface of the flow pipe 102. The transducer-housing 200 is angled and when mounted in the flow pipe 100 aligned with another transducer-housing 200 in the flow pipe 100 to ensure optimal transmission of ultrasound from one transducer 302 to another. The membrane 301 is mounted to cover a membrane opening 201 provided in one end of the transducer-housing 200. The membrane opening 201 is provided for insertion of the transducer into the transducer-housing 200 and together, the membrane 301 and the transducer-housing 200 create a single closed surface shielding the intern of the transducer assembly from the fluid in the flow pipe 100. The ultrasound transducer 302 is mounted on the inner surface of the membrane 301, and is thus shielded from the fluid in the flow pipe 100. Ultrasonic waves are travelling through the membrane 301, which is also an acoustic matching layer between the transducer 302 and the fluid in the flow pipe 100. The transducer assembly is arranged for transmission and reception of ultrasonic waves inside the flow pipe 100 to enable flow measurement. When ultrasonic waves are travelling along the flow in the flow pipe 100, a phase shift in the transmitted ultrasonic signal will be generated. The phase shift will depend on the flow velocity and by measuring the phase shift, the flow velocity can be calculated. Flow measurement using the phase shift principle is well known to the skilled person and described in literature.

The main part of the flow meter is the flow pipe 100 with an inlet and an outlet. The flow pipe 100 has flanges or alternatively threading for connection to further piping. The inlet and outlet of the flow pipe 100 are aligned to enable a straight routing of connecting pipes. The wall of the flow pipe 101 has one or more through-going holes 103 to support mounting of ultrasound transducer assemblies penetrating into the flow pipe 100. The through-going holes 103 in the flow pipe 100 have the purposes of ensuring alignment of the transducer assemblies, allowing electrical connection 304 to the ultrasound transducers 302 and enabling proper fastening of the transducer assemblies within the flow pipe 100. The flow pipe 100 may have further holes e.g. mounting other sensors like temperature sensors or pressure sensors.

The inner surface of the flow pipe 102 receiving the transducer-housing 200 is a curved surface with an inner curvature radius R. The transducer-housing 200 has a corresponding surface 207 meeting the inner surface of the flow pipe 102. The corresponding surface 207 is curved and adapted to the inner curvature radius R of the flow pipe 100; this is illustrated in fig. 2. There is thus no need for a plane surface at the inner surface of the flow pipe 102 to receive the transducer-housing 200. The inner surface of a standard prefabricated pipe is thus a suitable surface for mounting the transducer-housings 200. Typically, the inner curvature radius R of the flow pipe 100 will be in the range from 25mm to 250mm.

Between the inner surface of the flow pipe 102 receiving the transducer-housing 200 and the corresponding surface 207 of the transducer-housing 200, sealing means are arranged to prevent leakage of fluid from the flow pipe 100. In fig. 1 the sealing means provided between the transducer-housing 200 and the inner surface of the flow pipe 102 is shown in detail. The sealing is an O-ring 403 made from a rubber material or elastomer. The O-ring 403 is placed in a recess 205 on the corresponding surface 207 of the transducer-housing 200 meeting the inner surface of the flow pipe 102. The O-ring 403 is compressed between the wall of the flow pipe 101 and the transducer-housing 200. Alternatively the sealing material may be made from a fiber material or from a metal such as copper. Using a fiber gasket or other hard sealing means may require that the transducer assembly is pre-stressed against the inner surface of the flow pipe 102 by a flexible retention means. The retention means are mounted from outside the flow pipe 100. Flexibility of the retention means used in combination with hard sealing means can be provide by adding flexible element such as a spring or a disc washer. The pre-stressing of the sealing means is provided by a mechanical construction being assembled and mechanically pre-stressed by assembling the parts and e.g. applying torque to one or more threaded assembling elements.

If the flow meter is to operate at high temperatures the sealing material needs to be heat resistant. The hardness of the sealing material is preferably adapted so that a compression of the sealing, when the sealing is provided between the transducer-housing 200 and the inner surface of the flow pipe 102, and when the transducer-housing 200 is biased or pre-stressed towards the inner surface of the flow pipe 102, is between approximately 0.1% and less than 10% of a material thickness of the sealing. The compression is preferably in the interval between 2% and 5% of the material thickness of the sealing. The lower limit is primarily provided in order for the sealing to adapt to a roughness and/or minor differences in a slope of the inner surface of the flow pipe 100. The transducer-housing 200 protruding into the flow pipe 100 enables angling of the transducers 302 in an angle oblique to the flow direction. Angling of the transducers 302 is used to direct the ultrasonic waves towards another ultrasound transducer 302 or a reflector inside the flow pipe 100. Directing the ultrasound transducer 302 directly towards another ultrasound transducer 302 eliminates the need for reflectors inside the flow pipe 100.

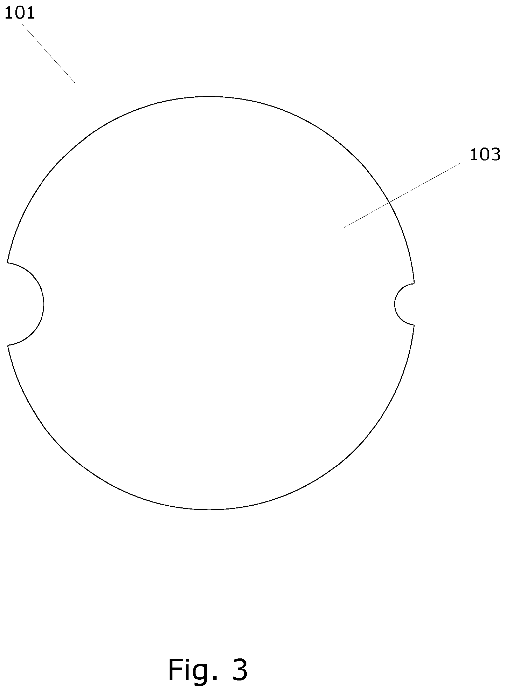

Correct alignment of the transducer-housings 200 needs to be assured. Accurate alignment of the transducer-housings 200 are important to ensure optimal transmission of ultrasonic waves from the transducer 302 in one transducer-housing 200 to a transducer 302 in another transducer-housing 200. To ensure accurate alignment the holes 103 in the wall of the flow pipe 101 for receiving the transducer-housing 200 are noncircular. The non-circular holes 103 ensure correct and accurate alignment of the transducer-housings 200. The corresponding surface 207 of the transducer-housing 200 facing the flow pipe wall is formed to fit into the non-circular holes 103 in the flow pipe wall 101. An example of a non-circular hole 103 is shown in fig. 3. As can be seen the hole receiving the transducer-housing 200 is non-circular and asymmetric. Asymmetric holes in the flow pipe 100 for receiving the transducer-housing 200 ensure that the transducer-housing 200 cannot be mounted pointing in a wrong direction. Non-circular asymmetric holes 103 in the flow pipe 100 for reception of the transducer-housing 200 ensures accurate and correct alignment of the transducer-housings 200.

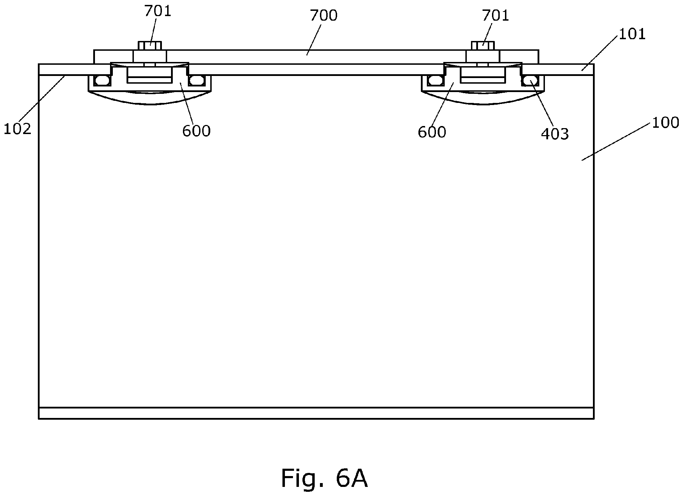

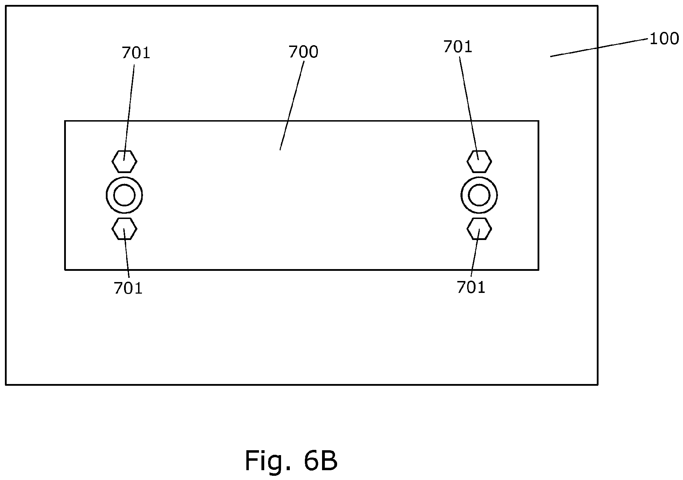

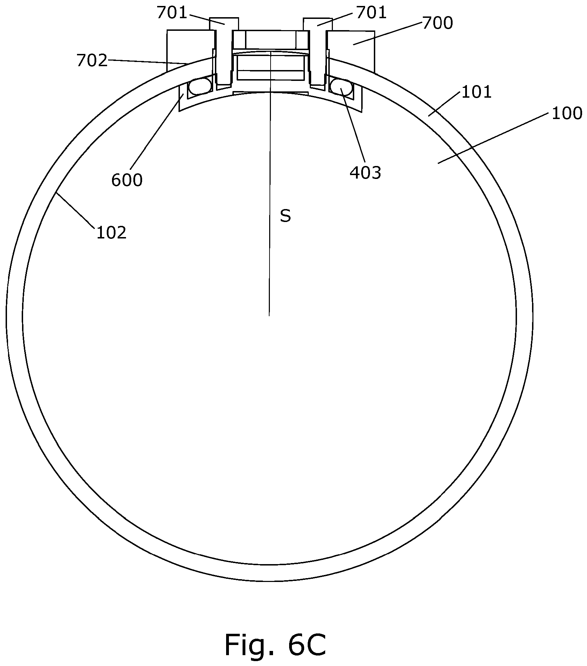

As an alternative to non circular asymmetric holes, the transducer-housing 200 may be mounted in a circular hole with one or more external fixating elements 700 ensuring correct alignment. The use of such an external fixating element 700 is illustrated in fig. 6A, 6B and 6C. The alignment may be assured by an external fixating element 700 connecting the transducer assembly to the flow pipe 100 or connecting two or more transducer assemblies to each other. The external fixating element 700 may be made from metal, a polymer or composite material and is locked to the transducer assemblies. Locking to the transducer assemblies may be done using means such as bolts, nots, screws 701.

The transducer-housing 200 is mounted on the inner surface of the flow pipe 102 from the inside of the flow pipe 100. The transducer-housing 200 is locked in place by a locking mechanism outside the flow pipe 100. The locking mechanism is a bolt 401 and a washer element 402. Including a flexible element like a spring or a disc washer pre-stressing can be applied to the sealing means 403. Other locking mechanisms such as e.g. locking rings or snap rings might be used as an alternative. The alternative locking mechanisms may as well be combined with flexible elements. The locking mechanism shall enable electrical connection 304 to the transducer 302 e.g. by allowing routing of cables and by protecting cables from being damaged during installation. Additional holes 404 in washers 402 for cable holes 202 ensure that the cable is not damaged by the washer rotating when applying torque to the bolt 401. The transducer-housing 200 has a membrane opening 201, which is to be closed off by installing the membrane 301. The membrane opening 201 is pointing into the cavity of the flow pipe 100.

The membrane 301 is a cup shaped structure. The transducer 302 is mounted in the bottom part of the cup structure formed by the membrane 301. The outer wall of the membrane 301 has protrusions 308 supporting mounting the in the transducer-housing 200 through the membrane opening 201. The inner wall of the membrane 301 has recesses or openings supporting locking of a spring nut 306. The spring nut 306 has matching protrusions and the nut may be locked in position inside the membrane 301 by a snapping mechanism or by applying torque to the spring nut 306. The membrane 301 is also a matching layer for the ultrasound transducer 302 to ensure optimal transfer of ultrasonic waves between the transducer 302 and the fluid in the flow pipe 100. The wall of the membrane 301 meeting the fluid in the flow pipe 100 shall thus have dimensions ensuring acoustic matching to the transducer 302 and the fluid in the flow pipe 100.

The transducer arrangement and the membrane 301 is assembled to a single transducer unit 300. The transducer unit 300 comprises the membrane 301, the transducer 302, a backing element 303, the spring nut 306 and a spring 305. The ultrasound transducer 302 is mounted on the membrane 301 and is pressed against the membrane 301 by the backing element 303. The backing element 303 provides the electrical connection 304 to the transducer 302 and includes terminals 312 for connecting a cable. A flexible element in the form of the spring 305 is pressing the backing element 303 against the transducer 302 and finally the spring nut 306 is locking the transducer unit 300 together applying stress to the spring 305. The electrical connection 304 to the transducer 302 is integrated in the backing element 303. A coaxial cable 307 with is connected to the terminals 312 of the backing element 303, which provides the electrical connection 304 to the transducer 302. The transducer-housing 200 is receiving the transducer unit 300 including the membrane 301 from the membrane opening 201. The coaxial cable 307 is routed through the cable hole 202 of the transducer-housing 200. The membrane 301 is received by the inner wall of the transducer-housing 203. Protrusions 308 on the membrane 301 and protrusions 204 on the inner wall of the transducer-housing 203 ensure correct positioning of the transducer unit 300 inside the transducer-housing 200. Between the inner wall of the transducer-housing 203 and the outer wall of the membrane 301 sealing in form of an O-ring 309 prevents fluid from penetrating from the flow pipe 100 into the inner cavity of the transducer-housing 200. The O-ring 309 is made from a flexible material e.g. rubber or elastomer.

The transducer unit 300 is locked within the transducer-housing 200 by means of a locking ring 310. The locking ring 310 is inserted between the membrane 301 and inner wall of the transducer-housing 203. The locking ring 310 is locked by a locking mechanism including a protrusion 311 on the locking ring 310 and a recess 206 on the inner wall 203 of the transducer-housing 200. The locking ring 310 assures that the transducer unit 300 is not sucked out of the transducer-housing 200 in case of low pressure inside the flow pipe 100. Further, the locking ring 310 prevents tampering with the transducer assembly.

For flow meters constructed to measure the flow of fluids at a low temperature, e.g. water meters for operation in the temperature range from 0 - 90 °C, the transducer-housing 200 and membrane 301 can be made from a polymer or composite material. Flow meters measuring the flow of fluids at high temperatures of up to 200 °C or above is often used in energy meters. For flowmeters constructed to measure the flow of fluids at a high temperature or under other harsh conditions, the transducer-housing 200 and membrane 301 may as an alternative be made from a metal. The transducer-housing 200 may be produced by injection moulding in a single monolithic piece.

The flow pipe 100 is made from a standard prefabricated metal pipe on which flanges are mounted and holes for transducer assemblies and other sensors are cut. The through-going holes 103 in the flow pipe 100 may be cut in the wall of the flow pipe 101 e.g. by the process of laser cutting. By using standard pipes and flanges, a simple non-customized production process may be selected for production of the flow pipe 100. Alternatively, the flow pipe 100 may be produced by a casting process. The flow pipe 100 may be made from polymer or composite material or metal e.g. steel, stainless steel, brass or cast iron. For larger dimension flow meters and meters for measuring the flow of fluids at high temperature or high pressure, flow pipes made of metal may be preferred.

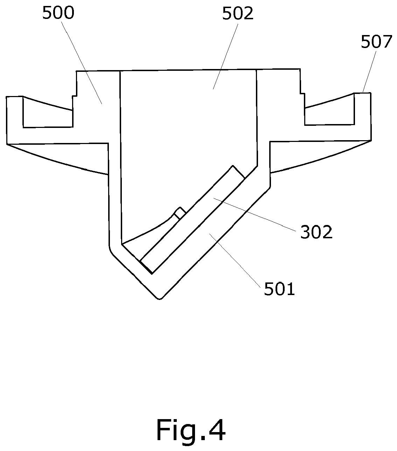

In an alternative embodiment illustrated in fig. 4, the transducer assembly is based on a closed transducer-housing 500. The closed transducer-housing 500 does not have a membrane opening 201. The membrane is an integrated membrane 501, which form a part of the closed transducer-housing 500. The integrated membrane 501 is angled in an angle oblique to the flow direction in order to direct the transmitted ultrasonic waves in an optimal direction inside the flow pipe 100. The closed transducer-housing 500 has the advantage of providing a single closed surface of the transducer assembly towards the fluid inside the flow pipe 100. The closed transducer-housing 500 with the integrated membrane 501 is moulded in a single monolithic piece e.g. by injection moulding. The closed transducer-housing 500 has a transducer opening 502 for receiving the transducer arrangement. The transducer opening 502 is in the end of the closed transducer-housing 500 opposite to the integrated membrane 501. The closed transducer-housing 500 receives the transducer arrangement from the transducer opening 502. The ultrasound transducer 302 is mounted on the inner wall of the closed transducer-housing 500 forming the integrated membrane 501. The ultrasound transducer 302 may be glued to the integrated membrane 501 or pressed against the integrated membrane 501 by a backing element. The backing element might provide electrical connection transducer 302. The backing element may include a flexible element pressing the backing element against the transducer 302. The electrical connection to the transducer 302 is running in the cavity of the closed transducer-housing 500 to the outside of the flow pipe 100.

The transducer assembly is mounted on the curved inner surface of the flow pipe 102 by the same means as described above. Sealing means are include between the inner surface of the flow pipe 102 receiving the closed transducer-housing 500 and the corresponding surface 507 of the closed transducer-housing 500, sealing means are needed to prevent leakage of fluid from the flow pipe 100. The corresponding surface 507 of the closed transducer-housing 500 shall have a curvature radius adapted to the inner curvature radius R of the flow pipe 100.

The closed transducer-housing 500 is mounted in a circular hole in the wall of the flow pipe 101. The use of circular holes has the advantage that circular holes are simpler to produce than non-circular holes. Accurate alignment of the transducers mounted in a circular hole is assured by an external fixating element 700 illustrated in figure 6A-6C. The closed transducer-housing 500 is locked to the external fixating element 700 using locking means such as bolts 701. Correct alignment between the closed transducer-housing 500 and the external fixating element 700 is assured by using two locking means. Alternatively, the form factor of the transducer-housing 500 may be designed to fit into a matching mechanical structure of the external fixating element 700 and in this way ensure correct alignment between the external fixating element 700 and the transducer-housing 500, using only a single locking means. The external fixating element 700 is locked to another transducer-housing 500 as illustrated in fig. 6A and 6B. In this way, accurate alignment of the two transducer-housings 500 connected by the external fixating element 700 is assured. As an alternative to locking two transducer assemblies together by the external fixating element 700 the external fixating element 700 may be locked to another fixing point e.g. an element welded to the outer surface of the flow pipe 100 or other fixing points fixated to the outer surface of the flow pipe 100. This will especially be advantageous in the case the transducer assemblies are separated by a large distance or mounted on opposite sides of the flow pipe 100.

Fig. 6 C illustrates an external fixating element 700, which has a curved surface 702 with a curvature radius S equal to the outer curvature radius of the flow pipe 100. The curved surfaces of the flow pipe 100 and the external fixating element 700 meeting each other will when pressed together by the locking means 701 ensure alignment of the transducer-housing 500 to the flow pipe 100. This has the advantage that the external fixating element 700 does not need to be connected to two or more transducer-housings 500 or other fixing points, as the curvature of the flow pipe 100 and the external fixating element 700 ensure alignment of the transducer assembly. The external fixating is thus only locked to the transducer-housing 500 of a single transducer assembly by use of locking means.

As an alternative, the transducer assembly using a closed transducer-housing 500 may be mounted in a non-circular hole 103, an asymmetric hole, or a non-circular asymmetric hole to ensure correct and accurate alignment of the transducer assembly.

The transducer assembly may as an alternative be mounted in a circular or non-circular hole 103 in the wall of the flow pipe 101 and locked in place by a locking mechanism on the outside of the flow pipe 100. The locking mechanism may be fastening means such as bolts, nuts, spring rings or locking rings. The locking mechanism may if needed include a flexible element like a spring or disc washer to apply pre-stressing to the sealing means.

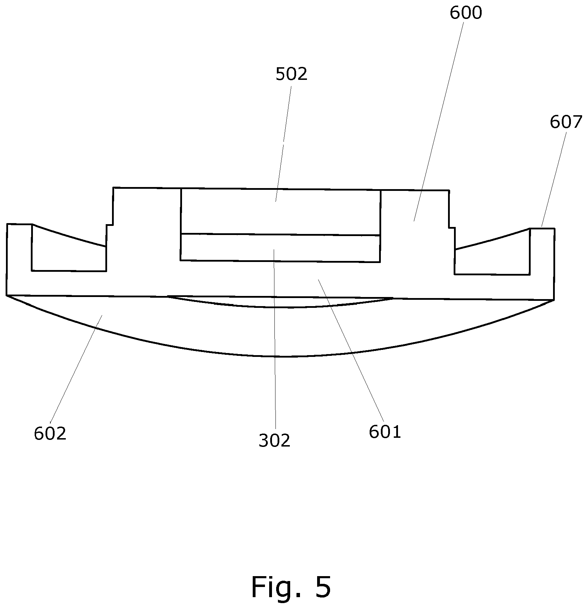

In an alternative embodiment of a closed transducer-housing the transducer is mounted in a non-angled closed transducer-housing 600, in which the transducer is mounted in a plane parallel to the flow direction. This is illustrated in illustrated in fig. 5. This embodiment is optimal if reflectors inside the flow pipe 100 is used. The transducer assembly is mounted on the curved inner surface of the flow pipe 102 by the same means as described above. The transducer-housing 600 is mounted and sealed by the same means as described above. The corresponding surface 607 of the non-angled closed transducer-housing 600 shall have a curvature radius adapted to the inner curvature radius R of the flow pipe 100. The non-angled integrated membrane 601 may create a small recess or protrusion on the inner surface 602 of the transducer-housing 600. Alternatively, the non-angled integrated membrane 601 is substantially plane in relation to the inner surface 602 that may create a plane surface parallel to the flow direction.

It is to be understood that the different transducer-housings (200, 500, 600) being, open closed, angled and non-angled may all be used in combination with the different approaches to locking mechanisms using noncircular, asymmetric holes or external fixating elements. Thus, the open and angled transducer-housing 200 in fig.2 may be adapted to be combined with the external fixating element 700 in fig. 6A-6B. In the same way may the closed transducer-housing 500 and the non-angled closed transducer-housing 600 be adapted to be combined with the non-circular hole 103 illustrated in fig. 3.

## Claims

1. An ultrasound transducer assembly, for being mounted in a through-going hole (103) provided in a wall (101) of a flow pipe (100) of an ultrasonic flowmeter, the transducer assembly comprising;
- a transducer-housing (200, 500, 600) adapted to protrude into a cavity of the flow pipe (100),
- an ultrasound transducer (302) arranged inside the transducer-housing (200, 500, 600),
- a membrane (301, 501, 601) arranged to close off one end of the transducer-housing (200, 500, 600) and shield the transducer (302) from the cavity of the flow pipe,
- electrical connections (304) to the ultrasound transducer, and
- sealing means (403),
wherein
- the transducer assembly is arranged to be mounted on the curved surface of the flow pipe (102),
- the transducer-housing (200, 500, 600) has a corresponding surface (207, 507, 607) meeting the curved inner surface of the flow pipe (102), and
- the corresponding surface (207, 507, 607) has a curvature radius adapted to the inner curvature radius (R) of the flow pipe (101),
**characterized in that** the sealing means (403) are arranged between the inner surface of the flow pipe (102) and the corresponding surface (207, 507, 607) of the transducer-housing (200, 500, 600) to prevent leakage of fluid from the flow pipe (100).

2. An ultrasound transducer assembly according to claim 1, wherein the transducer-housing (200, 500, 600) is injection molded in a single monolithic piece.

3. An ultrasound transducer assembly according to any of the previous claims, wherein the transducer-housing (200, 500) angles the transducer (302) in an angle oblique to the flow direction.

4. An ultrasound transducer assembly according to any of the previous claims, wherein the transducer assembly is configured to be locked in place by a locking mechanism outside the flow pipe (100).

5. An ultrasound transducer assembly according to any of the previous claims, wherein the transducer-housing (200) is arranged to receive the transducer unit (300) through a membrane opening (201) adapted to be closed off by the membrane (301).

6. An ultrasound transducer assembly according to any of the previous claims, wherein the membrane (301) is locked in position by a locking ring (310).

7. An ultrasound transducer assembly according to claim 1-4, wherein the membrane (501, 601) is an integrated part of the transducer-housing (500, 600), both formed together in a single monolithic piece.

8. An ultrasound transducer assembly according to claim 1-4 or 7, wherein the transducer-housing (500, 600) is arranged to receive the transducer arrangement through a transducer opening (502) provided in an end of the transducer-housing opposite the membrane (501, 601).

9. An ultrasound transducer assembly according to any of the previous claims, wherein the transducer assembly is arranged to be aligned by fitting into a non-circular through-going hole (103) in the wall of the flow pipe (101).

10. An ultrasound transducer assembly according to any of the previous claims, wherein the transducer assembly is arranged to be aligned by fitting into an asymmetric and non-circular through-going hole (103) in the wall (101) of the flow pipe.

11. A system comprising a flow pipe (100) of an ultrasonic flow meter and an ultrasound transducer assembly according to claim 1-8 wherein;
- the ultrasound transducer assembly is mounted in a through-going hole (103) in the wall of the flow pipe (101),
- the through-going hole (103) is circular,
- the transducer assembly is aligned by an external fixating element (700).

12. A system according to claim 11, wherein the external fixating element (700) has a curved surface (702) with a curvature radius adapted to the curvature radius (S) of the outer surface of the flow pipe (100).

13. A system according to claim 11 or 12, wherein the external fixating element (700) is locked to one transducer assembly.

14. A system according to claim 11, 12 or 13 wherein the external fixating element (700) is locked to two or more transducer assemblies.

15. A system according to claim 11, 12, 13 or 14, wherein the external fixating element (700) is locked to a fixating point on the wall of the flow pipe (101).

## Patentansprüche

1. Ultraschallwandleranordnung zur Anbringung in einem Durchgangsloch (103), das in einer Wand (101) eines Durchflussrohrs (100) eines Ultraschall-Durchflussmessers bereitgestellt ist, wobei die Wandleranordnung Folgendes umfasst:
- ein Wandlergehäuse (200, 500, 600), das dazu angepasst ist, in einen Hohlraum des Durchflussrohrs (100) hineinzuragen,
- einen Ultraschallwandler (302), der im Inneren des Wandlergehäuses (200, 500, 600) angeordnet ist,
- eine Membran (301, 501, 601), die dazu angeordnet ist, ein Ende des Wandlergehäuses (200, 500, 600) zu verschließen und den Wandler (302) von dem Hohlraum des Strömungsrohrs abzuschirmen,
- elektrische Verbindungen (304) zu dem Ultraschallwandler und Dichtungsmittel (403),
wobei
- die Wandleranordnung dazu angeordnet ist, an der gekrümmten Oberfläche des Durchflussrohrs (102) angebracht zu werden,
- das Wandlergehäuse (200, 500, 600) eine entsprechende Fläche (207, 507, 607) aufweist, die auf die gekrümmte innere Oberfläche des Durchflussrohrs (102) trifft, und
- die entsprechende Oberfläche (207, 507, 607) einen Krümmungsradius aufweist, der an den inneren Krümmungsradius (R) des Durchflussrohrs (101) angepasst ist, **dadurch gekennzeichnet, dass** die Dichtungsmittel (403) zwischen der inneren Oberfläche des Durchflussrohrs (102) und der entsprechenden Oberfläche (207, 507, 607) des Wandlergehäuses (200, 500, 600) angeordnet sind, um das Austreten von Fluid aus dem Durchflussrohr (100) zu verhindern.

2. Ultraschallwandleranordnung nach Anspruch 1, wobei das Wandlergehäuse (200, 500, 600) in einem einzigen monolithischen Stück spritzgegossen ist.

3. Ultraschallwandleranordnung nach einem der vorhergehenden Ansprüche, wobei das Wandlergehäuse (200, 500) den Wandler (302) in einem Winkel schräg zur Durchflussrichtung ausrichtet.

4. Ultraschallwandleranordnung nach einem der vorhergehenden Ansprüche, wobei die Wandleranordnung dazu konfiguriert ist, durch einen Verriegelungsmechanismus außerhalb des Durchflussrohrs (100) verriegelt zu werden.

5. Ultraschallwandleranordnung nach einem der vorhergehenden Ansprüche, wobei das Wandlergehäuse (200) dazu angeordnet ist, die Wandlereinheit (300) durch eine Membranöffnung (201) aufzunehmen, die dazu angepasst ist, durch die Membran (301) verschlossen zu werden.

6. Ultraschallwandleranordnung nach einem der vorhergehenden Ansprüche, wobei die Membran (301) durch einen Verriegelungsring (310) in ihrer Position verriegelt ist.

7. Ultraschallwandleranordnung nach Anspruch 1-4, wobei die Membran (501, 601) ein integrierter Teil des Wandlergehäuses (500, 600) ist, wobei beide zusammen in einem einzigen monolithischen Stück ausgebildet sind.

8. Ultraschallwandleranordnung nach Anspruch 1-4 oder 7, wobei das Wandlergehäuse (500, 600) dazu angeordnet ist, die Wandleranordnung durch eine Wandleröffnung (502), die in einem Ende des Wandlergehäuses gegenüber der Membran (501, 601) bereitgestellt ist, aufzunehmen.

9. Ultraschallwandleranordnung nach einem der vorhergehenden Ansprüche, wobei die Wandleranordnung dazu angeordnet ist, durch Einpassen in ein nicht kreisförmiges Durchgangsloch (103) in der Wand des Durchflussrohrs (101) ausgerichtet zu werden.

10. Ultraschallwandleranordnung nach einem der vorhergehenden Ansprüche, wobei die Wandleranordnung dazu angeordnet ist, durch Einpassen in ein asymmetrisches und nicht kreisförmiges Durchgangsloch (103) in der Wand (101) des Durchflussrohrs ausgerichtet zu werden.

11. System, umfassend ein Durchflussrohr (100) eines Ultraschall-Durchflussmessers und eine Ultraschallwandleranordnung nach Anspruch 1-8, wobei:
- die Ultraschallwandleranordnung in einem Durchgangsloch (103) in der Wand des Durchflussrohrs (101) angebracht ist,
- das Durchgangsloch (103) kreisförmig ist,
- die Wandleranordnung durch ein externes Befestigungselement (700) ausgerichtet ist.

12. System nach Anspruch 11, wobei das externe Befestigungselement (700) eine gekrümmte Oberfläche (702) mit einem Krümmungsradius aufweist, der an den Krümmungsradius (S) der äußeren Oberfläche des Durchflussrohrs (100) angepasst ist.

13. System nach Anspruch 11 oder 12, wobei das externe Befestigungselement (700) mit einer Wandleranordnung verriegelt ist.

14. System nach Anspruch 11, 12 oder 13, wobei das externe Befestigungselement (700) mit zwei oder mehr Wandleranordnungen verriegelt ist.

15. System nach Anspruch 11, 12, 13 oder 14, wobei das externe Befestigungselement (700) an einem Befestigungspunkt an der Wand des Durchflussrohrs (101) verriegelt ist.

## Revendications

1. Ensemble transducteur à ultrasons, destiné à être monté dans un trou traversant (103) ménagé dans une paroi (101) d'un tuyau d'écoulement (100) d'un débitmètre ultrasonique, l'ensemble transducteur comprenant ;
- un boîtier de transducteur (200, 500, 600) adapté pour faire saillie dans une cavité du tuyau d'écoulement (100),
- un transducteur à ultrasons (302) agencé à l'intérieur du boîtier de transducteur (200, 500, 600),
- une membrane (301, 501, 601) agencée pour obturer une extrémité du boîtier de transducteur (200, 500, 600) et protéger le transducteur (302) de la cavité du tuyau d'écoulement,
- des raccords électriques (304) au transducteur à ultrasons, et des moyens d'étanchéité (403),
- ledit ensemble transducteur étant agencé pour être monté sur la surface incurvée du tuyau d'écoulement (102),
- ledit boîtier de transducteur (200, 500, 600) possédant une surface correspondante (207, 507, 607) rencontrant la surface interne incurvée du tuyau d'écoulement (102), et
- ladite surface correspondante (207, 507, 607) présentant un rayon de courbure adapté au rayon de courbure interne (R) du tuyau d'écoulement (101), **caractérisé en ce que** les moyens d'étanchéité (403) sont agencés entre la surface interne du tuyau d'écoulement (102) et la surface correspondante (207, 507, 607) du boîtier de transducteur (200, 500, 600) pour empêcher une fuite de fluide à partir du tuyau d'écoulement (100).

2. Ensemble transducteur à ultrasons selon la revendication 1, ledit boîtier de transducteur (200, 500, 600) étant moulé par injection en une seule pièce monolithique.

3. Ensemble transducteur à ultrasons selon l'une quelconque des revendications précédentes, ledit boîtier de transducteur (200, 500) inclinant le transducteur (302) selon un angle oblique par rapport à la direction d'écoulement.

4. Ensemble transducteur à ultrasons selon l'une quelconque des revendications précédentes, ledit ensemble transducteur étant conçu pour être verrouillé en place par un mécanisme de verrouillage à l'extérieur du tuyau d'écoulement (100).

5. Ensemble transducteur à ultrasons selon l'une quelconque des revendications précédentes, ledit boîtier de transducteur (200) étant agencé pour recevoir l'unité de transducteur (300) à travers une ouverture de membrane (201) adaptée pour être obturée par la membrane (301).

6. Ensemble transducteur à ultrasons selon l'une quelconque des revendications précédentes, ladite membrane (301) étant verrouillée en position par une bague de verrouillage (310).

7. Ensemble transducteur à ultrasons selon les revendications 1 à 4, ladite membrane (501, 601) étant une partie intégrée du boîtier de transducteur (500, 600), tous deux formés ensemble en une seule pièce monolithique.

8. Ensemble transducteur à ultrasons selon les revendications 1 à 4 ou 7, ledit boîtier de transducteur (500, 600) étant agencé pour recevoir l'agencement de transducteur à travers une ouverture de transducteur (502) ménagée dans une extrémité du boîtier de transducteur opposée à la membrane (501, 601).

9. Ensemble transducteur à ultrasons selon l'une quelconque des revendications précédentes, ledit ensemble transducteur étant agencé pour être aligné en s'ajustant dans un trou traversant non circulaire (103) dans la paroi du tuyau d'écoulement (101).

10. Ensemble transducteur à ultrasons selon l'une quelconque des revendications précédentes, ledit ensemble transducteur étant agencé pour être aligné en s'ajustant dans un trou traversant asymétrique et non circulaire (103) dans la paroi (101) du tuyau d'écoulement.

11. Système comprenant un tuyau d'écoulement (100) d'un débitmètre ultrasonique et un ensemble transducteur à ultrasons selon les revendications 1 à 8,
- ledit ensemble transducteur à ultrasons étant monté dans un trou traversant (103) dans la paroi du tuyau d'écoulement (101),
- ledit trou traversant (103) étant circulaire,
- ledit ensemble transducteur étant aligné par un élément de fixation extérieur (700).

12. Système selon la revendication 11, ledit élément de fixation extérieur (700) possédant une surface incurvée (702) avec un rayon de courbure adapté au rayon de courbure (S) de la surface externe du tuyau d'écoulement (100).

13. Système selon la revendication 11 ou 12, ledit élément de fixation extérieur (700) étant verrouillé sur un ensemble transducteur.

14. Système selon la revendication 11, 12 ou 13, ledit élément de fixation extérieur (700) étant verrouillé sur deux ensembles transducteurs, ou plus.

15. Système selon la revendication 11, 12, 13 ou 14, ledit élément de fixation extérieur (700) étant verrouillé sur un point de fixation sur la paroi du tuyau d'écoulement (101).
